# EUROPEAN PATENT SPECIFICATION

(11) **EP 2 299 080 B1**
(45) Date of publication and mention of the grant of the patent: **28.03.2012**
(21) Application number: 10174090.0
(22) Date of filing: 26.08.2010
(51) Int. Cl.: F01N 3/20, F01N 3/035

(54) **Exhaust gas purification apparatus**
Abgasreinigungsvorrichtung
Appareil de purification des gaz d'échappement

(30) Priority: 02.09.2009 JP 2009202823
(43) Date of publication of application: 23.03.2011
(73) Proprietor: Kabushiki Kaisha Toyota Jidoshokki, Kariya-shi, Aichi 448-8671 (JP)
(72) Inventor: Kato, Yoshifumi, Kariya-shi Aichi 448-8671 (JP)
(74) Representative: TBK

(56) References cited:
- EP-A1- 1 961 933
- WO-A1-2004/076829

## Description

### BACKGROUND OF THE INVENTION

The present invention relates to an exhaust gas purification apparatus and, more specifically, to an exhaust gas purification apparatus having a urea SCR (selective catalytic reduction) system for reducing nitrogen oxides (NOx) in exhaust gas emitted from a diesel engine.

The urea SCR system has been developed for reducing NOx in exhaust gas emitted from a diesel engine. The urea SCR system employs an SCR catalyst for converting NOx into nitrogen (N2) and water (H2O) by chemical reaction between NOx and ammonia (NH3) generated by hydrolysis of urea water.

The SCR catalyst is provided in the exhaust passage between the engine and the muffler. Furthermore, an oxidation catalyst and an injection valve for Injecting urea water into exhaust gas are provided upstream of the SCR catalyst. The oxidation catalyst oxidizes hydrocarbons (HC) and carbon monoxide (CO) in exhaust gas into water (H2O) and carbon dioxide (CO2) and also promotes the oxidation of nitrogen oxide (NO) into nitrogen dioxide (N02).

A DPF (diesel particulate filter) is also provided in the exhaust passage between the engine and the muffler for reducing particulate matter (PM) such as carbon in exhaust gas. The exhaust gas purification apparatus including the urea SCR system and the DPF has many components provided between the engine and the muffler and requires a large space for mounting of such components to a vehicle. Therefore, the urea SCR system is required to be downsized and also to accomplish the NOx reduction efficiently for the usage of urea water.

Document JP 2006-519331 T (corresponding to WO 2004/076037A1) discloses an exhaust gas purification apparatus that includes a platinum-containing precatalyst having a function of filtering PM in exhaust gas, an SCR catalyst provided downstream of the platinum-containing precatalyst, a first supply device provided upstream of the platinum-containing precatalyst for supplying ammonia or urea and a second supply device provided between the platinum-containing precatalyst and the SCR catalyst for supplying ammonia or urea. The platinum-containing precatalyst functions as a reduction catalyst under a temperature that is below about 250°C and also as an oxidation catalyst under a temperature that is about 250°C or higher. The SCR catalyst is activated as a reduction catalyst under a temperature that is about 250°C or higher.

In the exhaust gas purification apparatus according to the above Published Japanese Translation, when the temperature of exhaust gas is under T1 that is between 220°C and 270°C, ammonia or urea is supplied from the first supply device and then, ammonia or ammonia generated by the hydrolysis of urea in the platinum-containing precatalyst reduces NOx in the exhaust gas. When the temperature of exhaust gas exceeds T1, ammonia or urea is supplied from the second supply device and then, ammonia or ammonia generated in the SCR catalyst by the hydrolysis of urea reduces NOx in exhaust gas. Oxidation of ammonia in the platinum-containing precatalyst is prevented by supplying ammonia or urea from the second supply device. Thus, the exhaust gas purification apparatus uses the supplied ammonia or urea efficiently for the NOx reduction.

However, when urea is supplied from either of the first supply device and the second supply device in the exhaust gas purification apparatus of the above Published Japanese Translation, the time for which the supplied urea stays upstream of the platinum-containing precatalyst or the SCR catalyst before reaching the precatalyst or the catalyst should be long for ensuring the time that is long enough for urea to be hydrolyzed into ammonia. The distances between the first supply device and the platinum-containing precatalyst and between the second supply device and the SCR catalyst, respectively, should be long enough for the hydrolysis of urea. Therefore, there have been problems in that the apparatus increases its length and it is difficult to make it small.

Document EP 1 961 933 A1 discloses an exhaust gas purification apparatus in which a catalytic activated diesel particle filter has a filter body and an oxidation-active catalytic coating and has a selective catalytic reduction (SCR) active coating in the reaction, where an ammonia storage material is contained. An arrangement maintains the layers, so that the exhaust gas to be cleaned is passed in catalytically active coating in the SCR-reaction and after that the oxidation active catalytic coating is passed. The active coating in selective catalytic reduction reaction contains multiple hydrogen cations or transition metal cations exchanged zeolites.

The object of the present invention is directed to providing an exhaust gas purification apparatus that improves the efficiency of NOx reduction relative to the urea water usage and makes possible downsizing of the apparatus.

### SUMMARY OF THE INVENTION

The above object is solved by an exhaust gas purification apparatus comprising the features of claim 1. Further developments are stated in the dependent claims.

The exhaust gas purification apparatus of the present invention includes a first oxidation catalyst provided in a passage through which exhaust gas flows, a particulate matter collecting device provided downstream of the first oxidation catalyst, a SCR catalyst integrally formed with the particulate matter collecting device and having ammonia adsorption property, a second oxidation catalyst integrally formed with the particulate matter collecting device and oxidizing ammonia at a predetermined temperature or higher and a urea water supply device provided upstream of the SCR catalyst for supplying urea water. The urea water supply device supplies urea water only when a temperature of the second oxidation catalyst is below the predetermined temperature. The activation temperature of the SCR catalyst is below the predetermined temperature.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a schematic view of an exhaust gas purification apparatus according to an embodiment of the present invention and its associated components; and
FIG. 2 is a schematic cross sectional view of the exhaust gas purification apparatus of FIG. 1.

### DETAILED DESCRIPTION OF THE PREFERRED EMBODIMENT

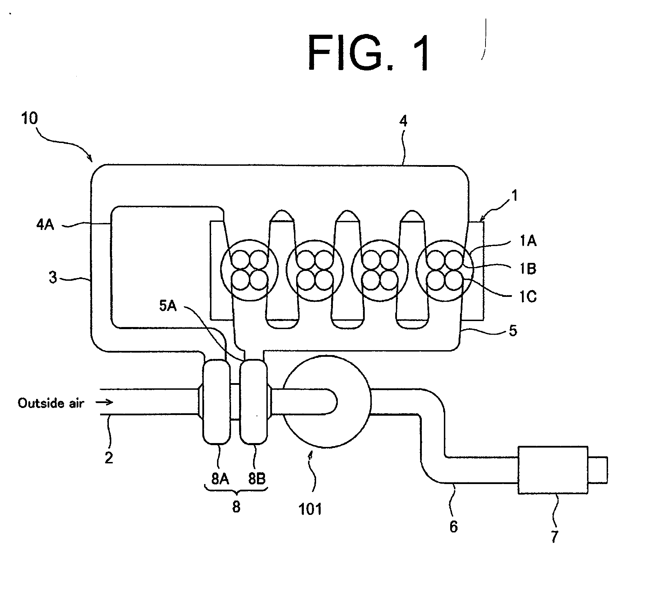

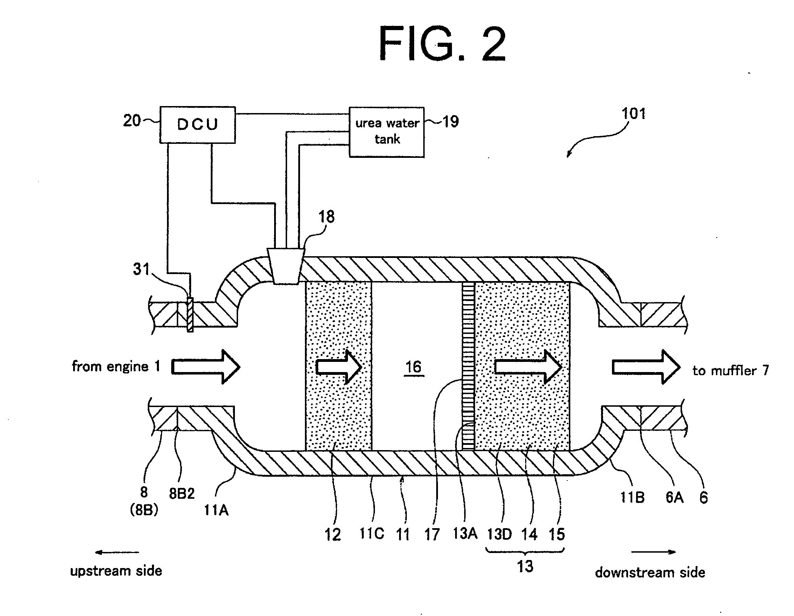

The following will describe the embodiment of the exhaust gas purification apparatus according to the present invention with reference to the accompanying drawings. Referring to FIGS. 1 and 2 showing the embodiment, the exhaust gas purification apparatus which is designated generally by reference numeral 101 and its associated components will be described. The exhaust gas purification apparatus 101 is employed in a vehicle equipped with a diesel engine.

Referring to FIG. 1, an engine assembly including an engine 1 and the exhaust gas purification apparatus 101 is designated generally by reference numeral 10. The engine 1 has a plurality of cylinders 1 A each having an intake port 1B to which an intake manifold 4 is connected for distributing intake air to the respective cylinders 1A. The intake manifold 4 has an inlet 4A to which an engine intake pipe 3 is connected and the engine intake pipe 3 is further connected to a compressor housing 8A of a turbocharger 8. The compressor housing 8A is connected to an intake pipe 2 through which outside air is introduced.

On the other hand, an exhaust manifold 5 is connected to a plurality of exhaust ports 1C of the engine 1 for collecting exhaust gas emitted from the respective exhaust ports 1C. An outlet 5A of the exhaust manifold 5 is connected to a turbine housing 8B of the turbocharger 8, to which the exhaust gas purification apparatus 101 having a substantially cylindrical shape is connected and disposed adjacent to a lateral side of the engine 1. The exhaust gas purification apparatus 101 is connected to an exhaust pipe 6, the downstream end of which is further connected to a muffler 7. The intake pipe 2, the turbocharger 8, the engine intake pipe 3 and the intake manifold 4 cooperate to form an intake system of the vehicle, while the exhaust manifold 5, the turbocharger 8, the exhaust gas purification apparatus 101, the exhaust pipe 6 and the muffler 7 cooperates to form an exhaust system of the vehicle. The engine 1, the engine intake pipe 3, the intake manifold 4, the exhaust manifold 5 and the turbocharger 8 cooperate to form the aforementioned engine assembly 10.

Referring to FIG. 2, the exhaust gas purification apparatus 101 includes a casing 11 having a substantially cylindrical shape. The casing 11 has an upstream end face 11A to which the outlet 8B2 of the turbine housing 8B of the turbocharger 8 is connected and a downstream end face 11B to which the upstream end 6A of the exhaust pipe 6 is connected. The casing 11 communicates internally with the turbine housing 8B and the exhaust pipe 6.

The cylindrical casing 11 houses therein a first oxidation catalyst layer 12 supporting a first oxidation catalyst and a diesel particulate filter (DPF) 13D forming a particulate matter collecting device disposed downstream of the first oxidation catalyst layer 12 with respect to the flow of exhaust gas in the casing 11. The first oxidation catalyst layer 12 and the DPF 130 are made in the form of a layer extending perpendicular to the axis of a cylindrical portion 11C of the casing 11 over the entire radial dimension of the interior of the cylindrical portion 11C. The first oxidation catalyst layer 12 and the DPF 13D are disposed spaced apart from each other thereby to form therebetween a space 16.

The first oxidation catalyst layer 12 supports thereon the first oxidation catalyst for oxidizing hydrocarbons (HC) and carbon monoxide (CO) into water (H2O) and carbon dioxide (CO2) and also promoting the oxidation of nitrogen monoxide (NO) into nitrogen dioxide (N02). The first oxidation catalyst of the first oxidation catalyst layer 12 uses material such as platinum (Pt), palladium (Pd), rhodium (Rh), silver (Ag), iron (Fe), cupper (Cu), nickel (Ni), gold (Au) or a mixture of two or more of these materials.

The DPF 13D is made of a porous material such as ceramic for capturing particulate matter (PM) contained in exhaust gas. For preventing the deterioration of the DPF 13D caused by the accumulation of PM, PM accumulated in the DPF 13D needs to be burned.

Furthermore, the DPF 13D has an (urea) SCR catalyst 14 as a selective catalytic reduction catalyst supported thereon, e.g., by coating. The DPF 13D and the SCR catalyst 14 cooperate to integrally form a DPF 13 with catalyst.

The selective catalytic reduction catalyst serves to promote the chemical reaction selectively among specific chemical substances. Specifically, the urea SCR catalyst (hereinafter referred to as SCR catalyst) catalyzes the reaction between nitrogen oxide (NOx) and ammonia (NH3) thereby to reduce NOx into nitrogen (N2) and water (H2O). Though the details will be described later, the SCR catalyst 14 has the above-described function and preferably has high ammonia adsorption property and also catalytic property under a low temperature. The ammonia adsorption property of the SCR catalyst 14 should preferably be over 20 mg/l, i.e. capable of adsorbing more than 20 mg of ammonia per litter of base material supporting the SCR catalyst 14, and the SCR catalyst 14 should preferably be activated catalytically at 150 °C or higher. The SCR catalyst 14 should preferably be made of a zeolite replaced by a metal such as iron and the like. The SCR catalyst 14 being activated means rapid increase of the reduction rate of NOx by ammonia.

The DPF 13D supporting the SCR catalyst 14 also has a second oxidation catalyst 15 supported thereon, e.g., by coating, for decreasing the combustion temperature of PM captured by the DPF 13D. The DPF 13D and the second oxidation catalyst 15 cooperate to integrally form the DPF 13 with catalyst. Thus, the DPF 13 with catalyst is formed by the DPF 13D, the SCR catalyst 14 and the second oxidation catalyst 15. The second oxidation catalyst 15 should preferably decrease the PM combustion temperature to a temperature between 400 and 650 °C.

The second oxidation catalyst 15 functions not only to decrease the PM combustion temperature but also to oxidize and decompose ammonia under a predetermined temperature Tp°C or higher. However, the second oxidation catalyst 15 neither oxidizes nor decomposes ammonia at a temperature below the predetermined temperature Tp°C. The predetermined temperature Tp°C corresponds to a temperature at which the second oxidation catalyst 15 is activated. The oxidation catalyst being activated means that 50% of object substance for oxidation is oxidized to a predetermined level. Since the temperature at which the catalyst is activated depends on the proportion of component materials of the catalyst and the concentration of the catalyst in the region of the DPF where the catalyst is supported thereon, the temperature Tp°C at which the second oxidation catalyst 15 is activated may be between 150 and 250°C. The second oxidation catalyst 15 may be Ag/Ce02 catalyst, i.e., silver (Ag) supported on ceria (CeO2).

The SCR catalyst 14 and the second oxidation catalyst 15 may be applied in either order to the DPF 13D to be supported thereon, firstly the SCR catalyst 14 and then the second oxidation catalyst 15 or in the reverse order. Alternatively, a mixture of the SCR catalyst 14 and the second oxidation catalyst 15 may be supported on the DPF 13D. The DPF 13D and the SCR catalyst 14 may be formed integrally in a manner that the SCR catalyst 14 is disposed in rear of the DPF 13D and the DPF 13D supports thereon the second oxidation catalyst 15.

An injection valve 18 that is an electromagnetic valve is provided upstream of the first oxidation catalyst layer 12 in the cylindrical portion 11C of the casing 11. The injection valve 18 forms the urea water supply device of the present invention. The injection valve 18 is connected to a urea water tank 19 provided in a vehicle (not shown) and operable to inject urea water upstream of the first oxidation catalyst layer 12 (SCR catalyst 14) in the casing 11. The injection valve 18 is electrically connected to a dosing control unit (DCU) 20 that controls the opening and closing operation of the injection valve 18. The urea water tank 19 has an electric pump for supplying urea water to the injection valve 18. The electric pump is electrically connected to the DCU 20 and the pump operation is controlled by the DCU 20. The DCU 20 may be provided separately or formed integrally with an ECU for the vehicle.

A cylindrically-shaped mixer 17 is provided on the upstream end face 13A of the DPF 13 with catalyst for distributing substances in exhaust gas uniformly over the end face 13A. The mixer 17 has a structure that is similar to that disclosed in document JP 6509020 T (corresponding to WO 9300990 A1) or document JP 2006 009608 A. The mixer disclosed in JP 6509020 T is made in the form of a lattice that divides the gas passage into plural cells so as to cause the gas flowing through each cell to flow spirally and also to flow toward the adjacent cell. This helps the substances in exhaust gas to be dispersed uniformly in the whole passage. On the other hand, the mixer disclosed in JP 2006 009608 A has plural plates each extending perpendicularly to the direction of gas flow, which provides serpentine gas passage serving to distribute the substances in the gas uniformly.

An exhaust gas temperature sensor 31 is provided downstream of the upstream end face 11A of the casing 11 for detecting the temperature of exhaust gas. The exhaust gas temperature sensor 31 is electrically connected to the DCU 20 and sends detected temperature information to the DCU 20. As described above, the exhaust gas purification apparatus 101 includes the SCR catalyst 14 and the DPF 13D in a manner that they are integrally formed and is fixed to the engine assembly 10 and disposed adjacent to the engine 1 (refer to FIG. 1).

The following will describe the operation of the exhaust gas purification apparatus 101 according to the embodiment and its associated components with reference to FIGS. 1 and 2. Referring to FIG. 1, while the engine 1 is running, outside air is flowed into the compressor housing 8A of the turbocharger 8 through the intake pipe 2. The air is pumped by a compressor wheel (not shown) in the compressor housing 8A and flowed to the engine intake pipe 3 under an increased pressure. The air is flowed into a cylinder 1A in the engine 1 through the engine intake pipe 3 and the intake manifold 4. Then, the air in the cylinder 1A is mixed with fuel (light oil) supplied into the cylinder 1A and the fuel is ignited spontaneously for combustion.

Exhaust gas produced by the combustion is discharged into the exhaust manifold 5 through a plurality of exhaust ports 1C to be collected by the exhaust manifold 5 and then flows into the turbine housing 8B of the turbocharger 8. The exhaust gas flowing through the turbine housing 8B increases the rotation speed of the turbine wheel (not shown) in the turbine housing 8B and the compressor wheel connected to the turbine wheel and then is discharged into the exhaust gas purification apparatus 101. After flowing through the exhaust gas purification apparatus 101, the exhaust gas flows through the exhaust pipe 6 and the muffler 7 and then is discharged outside the vehicle (not shown).

Referring to FIG. 2, all the exhaust gas flowed into the exhaust gas purification apparatus 101 flows firstly through the first oxidation catalyst layer 12. While the exhaust gas passes through the first oxidation catalyst layer 12, hydrocarbons and carbon monoxide in the exhaust gas are oxidized into carbon dioxide and water, and part of NO is oxidized into NO2 that can be reduced easily. After flowing through the first oxidation catalyst layer 12, the exhaust gas flows through the mixer 17 and then into the DPF 13 with catalyst. PM in the exhaust gas is captured by the DPF 13D of the DPF 13 with catalyst.

Meanwhile, the DCU 20 performs either one of the following two operations described under (1) and (2) based on the temperature information sent by the exhaust gas temperature sensor 31.
(1) When the temperature T of exhaust gas detected by the exhaust gas temperature sensor 31 is below the predetermined temperature Tp°C at which the second oxidation catalyst 15 is activated:
   It is noted the temperature T of exhaust gas detected by the exhaust gas temperature sensor 31 may be regarded as the temperature of the second oxidation catalyst 15 of the DPF 13 with catalyst. Therefore, when the temperature T of exhaust gas detected by the exhaust gas temperature sensor 31 shows Tp °C or higher, it may be considered that the second oxidation catalyst 15 is under a temperature environment where the second oxidation catalyst 15 can oxidize and decompose ammonia.

The following description will be made with the assumption that the predetermined temperature Tp°C is 250°C.

When the temperature of exhaust gas is below 250°C, the DCU 20 operates the electric pump in the urea water tank 19 and also opens the injection valve 18. Then, urea water is injected from the injection valve 18 upstream of the first oxidation catalyst layer 12 in the casing 11.

The injected urea water is carried by the exhaust gas and flows through the first oxidation catalyst layer 12. The first oxidation catalyst layer 12 has therein the heat due to the exhaust gas flowing therethrough and also the reaction heat due to the oxidation of NO and other substances in exhaust gas. Therefore, most of the urea water flowing through the first oxidation catalyst layer 12 is hydrolyzed into ammonia and carbon dioxide by the heat that the first oxidation catalyst layer 12 has and the heat of the exhaust gas flowing through the first oxidation catalyst layer 12.

After flowing through the first oxidation catalyst layer 12, the exhaust gas containing urea water and ammonia flows through the space 16 and then to the mixer 17. Urea water and ammonia are flowed through the mixer 17 while being dispersed and then into the DPF 13 with catalyst. Meanwhile, urea water in the exhaust gas that is not hydrolyzed in the first oxidation catalyst layer 12 is hydrolyzed into ammonia due to the heat of the exhaust gas before reaching the DPF 13 with catalyst that is integrally formed with the SCR catalyst 14. The time during which the urea water stays in the first oxidation catalyst layer 12, the space 16 and the mixer 17 while flowing therethrough before reaching the SCR catalyst 14 satisfies the reaction time required for the hydrolysis of urea water. Thus, the hydrolysis of urea water is accomplished with a high efficiency.

As described above, since urea water injected from the injection valve 18 is hydrolyzed not only in the first oxidation catalyst layer 12 but also in the space 16 through which urea water flows before reaching the DPF 13 with catalyst, urea water is hydrolyzed into ammonia with a high efficiency. Therefore, the distance between the first oxidation catalyst layer 12 and the DPF 13 with catalyst in the exhaust gas purification apparatus 101, i.e., the distance of the space 16 can be shortened, thus making it possible to construct the exhaust gas purification apparatus 101 small.

Ammonia contained in exhaust gas flowing into the DPF 13 with catalyst performs either one of the following two operations (1A) and (1B) depending on the temperature condition of the SCR catalyst 14 of the DPF 13 with catalyst. The temperature of the SCR catalyst 14 is equivalent to the temperature of the second oxidation catalyst 15 and, therefore, the temperature T of the exhaust gas detected by the exhaust gas temperature sensor 31 is regarded as the temperature of the SCR catalyst 14.
(1A) When the temperature of the SCR catalyst 14 is below temperature Ts°C at which the SCR catalyst 14 is activated:

The following description will be made with the assumption that the predetermined temperature Ts°C is 150°C at which catalyst is generally activated. When the temperature of the SCR catalyst 14 is below 150°C, the SCR catalyst 14 is not activated and, therefore, ammonia contained in the exhaust gas flowing into the DPF 13 with catalyst does not reduce NOx (including NO and NO2) contained in the exhaust gas by the catalytic reaction of the SCR catalyst 14 but is adsorbed on the SCR catalyst 14. After flowing through the DPF 13 with catalyst, the exhaust gas from which harmful ammonia is removed is discharged from the exhaust gas purification apparatus 101. Therefore, the use of an SCR catalyst with high ammonia adsorption property is preferable for preventing harmful ammonia from being discharged outside the vehicle (not shown).
(1B) When the temperature of the SCR catalyst 14 is the temperature Ts°C (150°C) at which the SCR catalyst 14 is activated, or higher

Ammonia that is contained in exhaust gas flowing into the DPF 13 with catalyst reduces NOx in the exhaust gas into N2 by the catalytic reaction of the SCR catalyst 14. Residual ammonia that is not used in the reduction of NOx is adsorbed on the SCR catalyst 14. Thus, the exhaust gas having reduced its NOx content and removed harmful ammonia therefrom while flowing through the DPF 13 with catalyst is discharged from the exhaust gas purification apparatus 101. The lower the temperature Ts°C at which the SCR catalyst 14 is activated, the larger the temperature range in which the SCR catalyst 14 can reduce NOx in exhaust gas. Therefore, the temperature Ts°C at which the SCR catalyst 14 is activated should preferably be low.

In either case (1A) or (1B), the catalytic temperature of the second oxidation catalyst 15 of the DPF 13 with catalyst is substantially equivalent to the temperature of the exhaust gas detected by the exhaust gas temperature sensor 31, which is below 250°C that does not cause catalyst to oxidize and decompose ammonia. Therefore, the second oxidation catalyst 15 neither oxidizes nor decomposes ammonia in exhaust gas flowing through the DPF 13 with catalyst. Thus, ammonia generated on the hydrolysis of urea water injected by the injection valve 18 is neither oxidized nor decomposed by the second oxidation catalyst 15, but used for reducing NOx in exhaust gas or adsorbed on the SCR catalyst 14 with a high efficiency.
(2) When the temperature T of the exhaust gas detected by the exhaust gas temperature sensor 31 is the predetermined temperature Tp°C (250°C), at which the second oxidation catalyst 15 is activated, or higher:

The DCU 20 stops the operation of the electric pump in the urea water tank 19 and also closes the injection valve 18 thereby to stop the injection of urea water from the injection valve 18. Therefore, exhaust gas introduced into the casing 11 containing neither urea water nor ammonia generated by the hydrolysis of urea water flows through the first oxidation catalyst layer 12 and the mixer 17 and then into the DPF 13 with catalyst.

Meanwhile, the SCR catalyst 14 of the DPF 13 with catalyst has a lot of ammonia that is generated and adsorbed on the SCR catalyst 14 when the temperature T of the exhaust gas is below 250°C. The SCR catalyst 14 is activated when the temperature T of the exhaust gas is 250°C or higher. Therefore, NOx in exhaust gas flowing into the DPF 13 with catalyst is reduced by ammonia that is adsorbed on the SCR catalyst 14 under the catalytic reaction of the SCR catalyst 14. Thus, the exhaust gas having reduced its NOx content and removed harmful ammonia therefrom while flowing through the DPF 13 with catalyst is discharged from the exhaust gas purification apparatus 101.

The temperature at which the second oxidation catalyst 15 of the DPF 13 with catalyst is activated is 250°C at which the second oxidation catalyst 15 can oxidize and decompose ammonia, or higher. However, exhaust gas flowing through the DPF 13 with catalyst contains no ammonia, but ammonia is only adsorbed on the SCR catalyst 14. Since the ammonia that is adsorbed on the SCR catalyst 14 is used for reducing NOx as described before, the ammonia is neither oxidized nor decomposed by the second oxidation catalyst 15. Thus, when the exhaust gas temperature is 250°C or higher, ammonia generated by the hydrolysis of urea water is used for reducing NOx in the exhaust gas without being oxidized and decomposed by the second oxidation catalyst 15.

Referring to FIG. 1, the exhaust gas purification apparatus 101 is disposed adjacent to the engine 1 and, therefore, hot exhaust gas immediately after being emitted from the engine 1 flows into the exhaust gas purification apparatus 101 through the turbocharger 8. Furthermore, the heat generated by the engine 1 is imparted to the exhaust gas purification apparatus 101 located adjacent to the engine 1 and transmitted inward through outer wall of the casing 11.

Referring to FIG. 2, the first oxidation catalyst layer 12 and the DPF 13 with catalyst both disposed inside the casing 11 are subject to the heat of the hot exhaust gas and the heat imparted from the engine 1 and, therefore, the temperature of the respective components tends to increase. The temperature increasing rate of the respective components, i. e., the oxidation catalyst of the first oxidation catalyst layer 12 and the SCR catalyst 14 of the DPF 13 with catalyst, in the exhaust gas purification apparatus 101 during a cold start of the engine 1 is improved and the time required for activating each catalyst during such cold start of the engine 1 is shortened. Eventually, the performance of NOx reduction is improved.

Thus, the exhaust gas purification apparatus 101 according to the present invention includes the first oxidation catalyst layer 12 provided in exhaust gas passage, the DPF 13D provided downstream of the first oxidation catalyst layer 12, the SCR catalyst 14 that is integrally formed with the DPF 13D and can adsorb ammonia, the second oxidation catalyst 15 that is integrally formed with the DPF 13D and oxidizes ammonia at a predetermined temperature or higher and the injection valve 18 provided upstream of the SCR catalyst 14 for supplying urea water only when the temperature of the second oxidation catalyst 15 is below a predetermined temperature.

The exhaust gas purification apparatus 101, in which the SCR catalyst 14 and the second oxidation catalyst 15 are integrally formed with the DPF 13D, can be made small. Ammonia is generated on the hydrolysis of urea water supplied by the injection valve 18 with the aid of the first oxidation catalyst layer 12 and the like. However, since urea water is supplied below a predetermined temperature at which the second oxidation catalyst 15 is not activated for the oxidation, no generated ammonia is oxidized and decomposed by the second oxidation catalyst 15. In other words, when the temperature of the second oxidation catalyst 15 is below the predetermined temperature at which the second oxidation catalyst 15 is not activated for the oxidation, NOx in exhaust gas is reduced under the catalytic reaction of the SCR catalyst 14 by ammonia that is generated on the hydrolysis of urea water and contained in exhaust gas. Residual ammonia that is not used for reducing NOx is adsorbed on the SCR catalyst 14. On the other hand, when the temperature of the second oxidation catalyst 15 is the predetermined temperature or higher, no urea water is supplied and NOx in exhaust gas is reduced by ammonia that is adsorbed on the SCR catalyst 14 under the catalytic reaction of the SCR catalyst 14. Thus, ammonia generated on the hydrolysis of urea water is used efficiently for reducing NOx, thereby improving the efficiency of NOx reduction for the urea water usage.

The exhaust gas temperature sensor 31 is provided in the exhaust gas purification apparatus 101 for detecting the temperature of exhaust gas flowing through the second oxidation catalyst 15. Regarding the temperature detected by the exhaust gas temperature sensor 31 as the temperature of the second oxidation catalyst 15, controlling of the urea water supply from the injection valve 18 can be made easily by using the temperature of the second oxidation catalyst 15.

By supplying urea water from the injection valve 18 provided upstream of the first oxidation catalyst layer 12, urea water flowing through the first oxidation catalyst layer 12 can make use of the heat that the first oxidation catalyst layer 12 has therein such as the reaction heat due to the oxidation of nitrogen monoxide in exhaust gas into nitrogen dioxide and the heat that the exhaust gas has therein. Therefore, urea water flowing through the first oxidation catalyst layer 12 can be hydrolyzed at a high efficiency. Furthermore, by supplying urea water upstream of the first oxidation catalyst layer 12, the time during which the supplied urea water stays upstream of the SCR catalyst 14 before reaching the SCR catalyst 14 is lengthened and, therefore, urea water can be hydrolyzed efficiently before reaching the SCR catalyst 14, with the result that NOx reduction performance of the exhaust gas purification apparatus 101 is improved. Accordingly, the distance between the first oxidation catalyst layer 12 and the DPF 13 with catalyst including the SCR catalyst 14 can be shortened, thereby making the exhaust gas purification apparatus 101 small.

Since the second oxidation catalyst 15 reduces the combustion temperature of the DPF13 with catalyst during burning of PM captured by the DPF 13D, the influence of the heat caused by burning PM for regenerating the DPF 13D on the SCR catalyst 14 can be reduced. Therefore, the catalytic function of the SCR catalyst 14 for reducing NOx in the exhaust gas purification apparatus 101, i. e., the durability of the SCR catalyst 14, can be improved.

Furthermore, since the first oxidation catalyst layer 12, the DPF 13 with catalyst (the DPF 13D, the SCR catalyst 14 and the second oxidation catalyst 15) and the injection valve 18 are all housed in the single casing 11, the exhaust gas purification apparatus 101 can be made still smaller.

The exhaust gas purification apparatus 101 is mounted to the engine assembly 10 and the hot exhaust gas emitted from the engine assembly 10 is introduced Into the exhaust gas purification apparatus 101. The heat generated by the engine assembly 10 in operation is transmitted inside the casing 11 of the exhaust gas purification apparatus 101. Therefore, the time for the temperature of the exhaust gas purification apparatus 101 to be increased to the level required for the hydrolysis of urea water and also for the temperature of the SCR catalyst 14 to the level required for activating the SCR catalyst 14 during a cold start of the engine can be shortened, with the result that the NOx reduction performance can be improved.

The exhaust gas purification apparatus 101 in the embodiment is provided in the engine assembly 10 having the turbocharger 8, but the present invention is not limited to this structure. When the engine assembly 10 dispenses with the turbocharger 8, the exhaust gas purification apparatus 101 may be directly connected to the outlet 5A of the exhaust manifold 5. The exhaust gas purification apparatus 101 may be provided spaced apart from the engine assembly 10.

The injection valve 18 is provided upstream of the first oxidation catalyst layer 12 so as to supply urea water upstream of the first oxidation catalyst layer 12 in the exhaust gas purification apparatus 101 according to the embodiment, but the present invention is not limited to this structure. The injection valve 18 may be so arranged that urea water is supplied toward the downstream side of the first oxidation catalyst layer 12. This structure prevents ammonia generated on the hydrolysis of urea water from being oxidized and decomposed by the first oxidation catalyst layer 12.

The casing 11 of the exhaust gas purification apparatuses 101 according to the embodiment is cylindrically-shaped, but the casing 11 is not limited to this shape. The casing 11 may be formed with a cross-section including a prism such as quadratic prism, a sphere or an ellipsoid.

The exhaust gas purification apparatus 101 according to the embodiment includes the exhaust gas temperature sensor 31 provided upstream of the end face 11A of the casing 11, but the structure is not limited to this structure. The exhaust gas temperature sensor 31 may be provided at a position that is adjacent to and immediately upstream or downstream of the second oxidation catalyst 15. The mixer 17 of the exhaust gas purification apparatus 101 may be dispensed with in the embodiment.

## Claims

1. An exhaust gas purification apparatus (101) comprising:
a first oxidation catalyst (12) provided in a passage (6) through which exhaust gas flows;
a particulate matter collecting device (13, 13D) provided downstream of the first oxidation catalyst (12);
a selective catalytic reduction catalyst (14) integrally formed with the particulate matter collecting device (13, 13D) and having ammonia adsorption property;
a second oxidation catalyst (15) integrally formed with the particulate matter collecting device (13, 13D) and oxidizing ammonia at a predetermined temperature (Tp°C) or higher; and
an urea water supply device (18) provided upstream of the selective catalytic reduction catalyst (14) for supplying urea water,
wherein the urea water supply device (18) supplies urea water only when a temperature of the second oxidation catalyst (15) is below the predetermined temperature (Tp°C); wherein the activation temperature (Ts°C) of the selective catalytic reduction catalyst (14) is below the predetermined temperature (Tp°C).

2. The exhaust gas purification apparatus according to claim 1, **characterized in that** the exhaust gas purification apparatus (101) further comprising:
an exhaust gas temperature sensor (31) for detecting a temperature of exhaust gas, wherein the temperature of exhaust gas detected by the exhaust gas temperature sensor (31) is utilized as the temperature of the second oxidation catalyst (15).

3. The exhaust gas purification apparatus according to any one of claims 1 and 2, **characterized in that** the urea water supply device (18) supplies urea water upstream of the first oxidation catalyst (12).

4. The exhaust gas purification apparatus according to any one of claims 1 through 3, **characterized in that** the second oxidation catalyst (15) decreases combustion temperature of the particulate matter captured by the particulate matter collecting device (13, 13D) to a temperature between 400 and 650°C.

5. The exhaust gas purification apparatus according to any one of claims 1 through 4, **characterized in that** the exhaust gas purification apparatus (101) further comprising:
a casing (11) housing the first oxidation catalyst (12), the particulate matter collecting device (13, 13D), the selective catalytic reduction catalyst (14), the second oxidation catalyst (15) and the urea water supply device (18).

6. The exhaust gas purification apparatus according to any one of claims 1 through 5, **characterized in that** the exhaust gas purification apparatus (101) is mountable to an engine assembly (10).

7. The exhaust gas purification apparatus according to any one of claims 1 through 6, **characterized in that** the exhaust gas purification apparatus (101) further comprising:
a mixer (17) provided on upstream end face (13A) of the particulate matter collecting device (13) for dispersing substances in exhaust gas flowed through the mixer (17).

8. The exhaust gas purification apparatus according to any one of claims 1 through 7, **characterized in that** the particulate matter collecting device (13), the selective catalytic reduction catalyst (14) and the second oxidation catalyst (15) are integrally formed in a manner that the selective catalytic reduction catalyst and the second oxidation catalyst (15) are coated in either order on the particulate matter collecting device (13).

9. The exhaust emission purification apparatus according to any one of claims 1 through 8, **characterized in that** the predetermined temperature Tp°C is a temperature, at which the second oxidation catalyst (15) is activated.

10. The exhaust gas purification apparatus according to any one of claims 1 through 9, **characterized in that** the selective catalytic reduction catalyst (14) preferably is made of a zeolite replaced by a metal, and the second oxidation catalyst (15) is an Ag/CeO2 catalyst.

## Patentansprüche

1. Abgasreinigungsvorrichtung (101) mit:
einem ersten Oxidationskatalysator (12), der in einem Kanal (6) vorgesehen ist, durch den Abgas strömt;
einer Partikulatstoff sammelnden Vorrichtung (13, 13D), die stromabwärtig des ersten Oxidationskatalysators (12) vorgesehen ist;
einem Katalysator (14) für eine selektive katalytische Reduktion, der mit der Partikulatstoff sammelnden Vorrichtung (13, 13D) einstückig ausgebildet ist und eine Ammoniakadsorptionsfähigkeit hat;
einem zweiten Oxidationskatalysator (15), der mit der Partikulatstoff sammelnden Vorrichtung (13, 13D) einstückig ausgebildet ist und Ammoniak bei einer vorbestimmten Temperatur (Tp°C) oder höher oxidiert; und
einer Ureawasserliefervorrichtung (18), die stromaufwärtig des Katalysators (14) für eine selektive katalytische Reduktion vorgesehen ist, um Ureawasser zu liefern,
wobei die Ureawasserliefervorrichtung (18) Ureawasser lediglich dann liefert, wenn eine Temperatur des zweiten Oxidationskatalysators (15) unterhalb der vorbestimmten Temperatur (Tp°C) ist, wobei die Aktivierungstemperatur (Ts°C) des Katalysators (14) für eine selektive katalytische Reduktion unterhalb der vorbestimmten Temperatur (Tp°C) ist.

2. Abgasreinigungsvorrichtung gemäß Anspruch 1,
**dadurch gekennzeichnet, dass**
die Abgasreinigungsvorrichtung (101) des Weiteren Folgendes aufweist:
einen Abgastemperatursensor (31) zum Erfassen einer Temperatur des Abgases, wobei die Temperatur des Abgases, die durch den Abgastemperatursensor (31) erfasst wird, als die Temperatur des zweiten Oxidationskatalysators (15) genutzt wird.

3. Abgasreinigungsvorrichtung gemäß einem der Ansprüche 1 oder 2, **dadurch gekennzeichnet, dass** die Ureawasserliefervorrichtung (18) Ureawasser stromaufwärtig des ersten Oxidationskatalysators (12) liefert.

4. Abgasreinigungsvorrichtung gemäß einem der Ansprüche 1 bis 3, **dadurch gekennzeichnet, dass** der zweite Oxidationskatalysator (15) die Verbrennungstemperatur des Partikulatstoffs, der durch die Partikulatstoff sammelnde Vorrichtung (13, 13D) eingefangen worden ist, auf eine Temperatur zwischen 400 und 650°C verringert.

5. Abgasreinigungsvorrichtung gemäß einem der Ansprüche 1 bis 4, **dadurch gekennzeichnet, dass** die Abgasreinigungsvorrichtung (101) des Weiteren Folgendes aufweist:
ein Gehäuse (11), in dem der erste Oxidationskatalysator (12), die Partikularstoff sammelnde Vorrichtung (13, 13D), der Katalysator (14) für die selektive katalytische Reduktion, der zweite Oxidationskatalysator (15) und die Ureawasserliefervorrichtung (18) untergebracht sind.

6. Abgasreinigungsvorrichtung gemäß einem der Ansprüche 1 bis 5, **dadurch gekennzeichnet, dass** die Abgasreinigungsvorrichtung (101) an einer Verbrennungsmotorbaugruppe (10) montierbar ist.

7. Abgasreinigungsvorrichtung gemäß einem der Ansprüche 1 bis 6, **dadurch gekennzeichnet, dass** die Abgasreinigungsvorrichtung (101) des Weiteren Folgendes aufweist:
einen Mischer (17), der an einer stromaufwärtigen Endseite (13A) der Partikulatstoff sammelnden Vorrichtung (13) vorgesehen ist zum Dispergieren von Substanzen im Abgas, das durch den Mischer (17) strömt.

8. Abgasreinigungsvorrichtung gemäß einem der Ansprüche 1 bis 7, **dadurch gekennzeichnet, dass** die Partikulatstoff sammelnde Vorrichtung (13), der Katalysator (14) für eine selektive katalytische Reduktion und der zweite Oxidationskatalysator (15) in einer Weise einstückig ausgebildet sind, dass der Katalysator für eine selektive katalytische Reduktion und der zweite Oxidationskatalysator (15) in einer beliebigen Reihenfolge an der Partikulatstoff sammelnden Vorrichtung (13) schichtartig angeordnet sind.

9. Abgasemissionsreinigungsvorrichtung gemäß einem der Ansprüche 1 bis 8, **dadurch gekennzeichnet, dass** die vorbestimmte Temperatur (Tp°C) eine Temperatur ist, bei der der zweite Oxidationskatalysator (15) aktiviert wird.

10. Abgasreinigungsvorrichtung gemäß einem der Ansprüche 1 bis 9, **dadurch gekennzeichnet, dass** der Katalysator (14) für eine selektive katalytische Reduktion vorzugsweise aus Zeolith ersetzt durch ein Metall hergestellt ist, und der zweite Oxidationskatalysator (15) ein Ag/CeO₂-Katalysator ist.

## Revendications

1. Appareil de purification des gaz d'échappement (101) comprenant :
un premier catalyseur d'oxydation (12) prédisposé dans un passage (6) à travers lequel les gaz d'échappement circulent ;
un dispositif (13, 13D) de collecte des matières particulaires prédisposé en aval du premier catalyseur d'oxydation (12) ;
un catalyseur (14) de réduction catalytique sélective formé en d'un seul tenant avec le dispositif (13, 13D) de collecte des matières particulaires et présentant une propriété d'adsorption de l'ammoniac ;
un deuxième catalyseur d'oxydation (15) formé d'un seul tenant avec le dispositif (13, 13D) de collecte des matières particulaires et oxydant l'ammoniac à une température prédéterminée (Tp°C) ou à une température plus élevée ; et
un dispositif (18) d'alimentation d'une solution urée-eau prédisposé en amont du catalyseur (14) de réduction catalytique sélective permettant de fournir une solution urée-eau,
dans lequel le dispositif (18) d'alimentation de solution urée-eau ne fournit la solution urée-eau que lorsqu'une température du deuxième catalyseur d'oxydation (15) est inférieure à la température prédéterminée (Tp°C) ; où la température d'activation (Ts°C) du catalyseur (14) de réduction catalytique sélective est inférieure à la température prédéterminée (Tp°C).

2. Appareil de purification des gaz d'échappement selon la revendication 1,
**caractérisé en ce que** l'appareil de purification des gaz d'échappement (101) comprend en outre :
un capteur (31) de température des gaz d'échappement destiné à détecter une température des gaz d'échappement, où la température des gaz d'échappement détectée par le capteur (31) de température des gaz d'échappement est utilisée au titre de la température du deuxième catalyseur d'oxydation (15).

3. Appareil de purification des gaz d'échappement selon l'une quelconque des revendications 1 et 2, **caractérisé en ce que** le dispositif d'alimentation (18) de solution urée-eau fournit une solution urée-eau en amont du premier catalyseur d'oxydation (12).

4. Appareil de purification des gaz d'échappement selon l'une quelconque des revendications 1 à 3, **caractérisé en ce que** le deuxième catalyseur d'oxydation (15) diminue la température de combustion de la matière particulaire collectée par le dispositif (13, 13D) de collecte des matières particulaires jusqu'à une température comprise entre 400 et 650°C.

5. Appareil de purification des gaz d'échappement selon l'une quelconque des revendications 1 à 4, **caractérisé en ce que** l'appareil (101) de purification des gaz d'échappement comprend en outre :
un carter (11) contenant le premier catalyseur d'oxydation (12), le dispositif (13, 13D) de collecte des matières particulaires, le catalyseur (14) de réduction catalytique sélective, le deuxième catalyseur d'oxydation (15) et le dispositif (18) d'alimentation de solution urée-eau.

6. Appareil de purification des gaz d'échappement selon l'une quelconque des revendications 1 à 5, **caractérisé en ce que** l'appareil (101) de purification des gaz d'échappement peut être monté sur un ensemble moteur (10).

7. Appareil de purification des gaz d'échappement selon l'une quelconque des revendications 1 à 6, **caractérisé en ce que** l'appareil (101) de purification des gaz d'échappement comprens en outre :
un mélangeur (17) prédisposé sur une face d'extrémité amont (13A) du dispositif (13) de collecte des matières particulaires permettant la dispersion des substances présentes dans les gaz d'échappement circulant à travers le mélangeur (17).

8. Appareil de purification des gaz d'échappement selon l'une quelconque des revendications 1 à 7, **caractérisé en ce que** le dispositif (13) de collecte des matières particulaires, le catalyseur (14) de réduction catalytique sélective et le deuxième catalyseur d'oxydation (15) sont formés d'un seul tenant de manière à ce que le catalyseur de réduction catalytique sélective et le deuxième catalyseur d'oxydation (15) revêtent dans un ordre quelconque le dispositif (13) de collecte des matières particulaires.

9. Appareil de purification d'émission d'échappement selon l'une quelconque des revendications 1 à 8, **caractérisé en ce que** la température prédéterminée Tp°C est une température à laquelle le deuxième catalyseur d'oxydation (15) est activé.

10. Appareil de purification des gaz d'échappement selon l'une quelconque des revendications 1 à 9, **caractérisé en ce que** le catalyseur (14) de réduction catalytique sélective est réalisé de préférence en zéolite remplacé par un métal, et le deuxième catalyseur d'oxydation (15) est un catalyseur Ag/Ce02.
